# EUROPEAN PATENT APPLICATION

(11) **EP 3 869 404 A2**
(43) Date of publication of application: **25.08.2021**
(21) Application number: 21183783.6
(22) Date of filing: 05.07.2021
(51) Int. Cl.: G06K 9/62, G06K 9/00

(54) **VEHICLE LOSS ASSESSMENT METHOD EXECUTED BY MOBILE TERMINAL, DEVICE, MOBILE TERMINAL AND MEDIUM**

(30) Priority: 25.12.2020 CN 202011559563
(71) Applicant: BEIJING BAIDU NETCOM SCIENCE AND TECHNOLOGY CO. LTD., 100085 Beijing (CN)
(72) Inventor: ZHANG, Yanlong, BEIJING, 100085 (CN); PENG, Mian, BEIJING, 100085 (CN); YANG, Zuncheng, BEIJING, 100085 (CN); HAN, Junyu, BEIJING, 100085 (CN); LIU, Jingtuo, BEIJING, 100085 (CN)
(74) Representative: Laqua, Bernd Christian Kurt

(57) **Abstract**

Embodiments of the present disclosure provide a vehicle loss assessment method executed by a mobile terminal, a device, a mobile terminal, a medium and a computer program product. The present disclosure relates to the field of artificial intelligence, and particularly relates to a computer vision and deep learning technology. The implementation solution includes: acquiring at least one input image; detecting vehicle identification information in the at least one input image; detecting vehicle damage information in the at least one input image; and determining a vehicle loss assessment result on the basis of the vehicle identification information and the vehicle damage information. By utilizing the method provided by the embodiments of the present disclosure, vehicle loss assessment may be executed offline at the mobile terminal without a need of sending the captured image to a cloud, so that the effects of high real-time performance, small network latency, saving of network service resources and saving of network bandwidth expenses in a loss assessment process may be achieved.

## Description

### TECHNICAL FIELD

The present disclosure relates to the field of artificial intelligence, particularly relates to computer vision and deep learning technology, and particularly relates to a vehicle loss assessment method executed by a mobile terminal, a device, a mobile terminal, a computer readable storage medium and a computer program product.

### BACKGROUND

Artificial intelligence is a subject of researching to enable a computer to simulate certain thinking processes and intelligent behaviors (e.g., learning, reasoning, thinking, planning and the like) of people, and not only includes hardware-level technologies, but also includes software-level technologies. The artificial intelligence hardware technologies generally include technologies such as a sensor, a special artificial intelligence chip, cloud computation, distributed storage, big data processing and the like; and the artificial intelligence software technologies mainly include several directions of a computer vision technology, a voice recognition technology, a natural language processing technology, machine learning/deep learning, a big data processing technology, a knowledge mapping technology and the like.

### SUMMARY

The present disclosure provides a vehicle loss assessment method executed by a mobile terminal, a device, a mobile terminal, a computer readable storage medium and a computer program product.

According to one aspect of the present disclosure, provided is a vehicle loss assessment method executed by a mobile terminal, including: acquiring at least one input image; detecting vehicle identification information in the at least one input image; detecting vehicle damage information in the at least one input image; and determining a vehicle loss assessment result on the basis of the vehicle identification information and the vehicle damage information.

According to another aspect of the present disclosure, provided is a vehicle loss assessment device applied to a mobile terminal, including: an image acquisition unit, configured to acquire at least one input image; a vehicle identification detection unit, configured to detect vehicle identification information in the at least one input image; a damage information detection unit, configured to detect vehicle damage information in the at least one input image; and a loss assessment unit, configured to determine a vehicle loss assessment result on the basis of the vehicle identification information and the vehicle damage information.

According to yet another aspect of the present disclosure, provided is a mobile terminal, including: at least one processor; and a memory in communication connection with the at least one processor, wherein the memory stores instructions executable by the at least one processor, and the instructions are executed by the at least one processor, such that the at least one processor execute the method as mentioned above.

According to yet another aspect of the present disclosure, provided is a non-transitory computer readable storage medium storing computer instructions, wherein the computer instructions are used for causing a computer to execute the method as mentioned above.

According to yet another aspect of the present disclosure, provided is a computer program product, including a computer program, wherein the computer program implements the method as mentioned above when being executed by a processor.

According to one or more embodiments of the present disclosure, intelligent loss assessment for a vehicle may be executed offline by utilizing the mobile terminal, so that a user may still obtain a maintenance scheme and maintenance cost of vehicle damage in a case of no network connection or poor network connection, thereby achieving effects of high real-time performance, small network latency, saving of network service resources and saving of network bandwidth expenses in the loss assessment process.

It should be understood that the contents described herein are not intended to identify the key or important characteristics of the embodiments of the present disclosure, and are also not used for limiting the scope of the present disclosure. Other characteristics of the present disclosure will become easy to understand by the following description.

### BRIEF DESCRIPTION OF THE DRAWINGS

The accompanying drawings exemplarily show the embodiments and constitute parts of the description, and are used for explaining exemplary implementations of the embodiments together with the text description of the description. The shown embodiments are merely used for illustration, but not used for limiting the scope of claims. In all the accompanying drawings, the same reference signs refer to similar, but not necessarily the same elements.
Fig. 1 shows a schematic diagram of an exemplary system in which various methods described herein may be implemented according to embodiments of the present disclosure;
Fig. 2 shows a schematic flowchart of a vehicle loss assessment method according to embodiments of the present disclosure;
Fig. 3 shows a flowchart of a schematic process of detecting vehicle damage information according to embodiments of the present disclosure;
Fig. 4 shows a schematic flowchart of a process of detecting a vehicle image to obtain a vehicle loss assessment result according to embodiments of the present disclosure;
Fig. 5 shows a schematic block diagram of a vehicle loss assessment device applied to a mobile terminal according to embodiments of the present disclosure; and
Fig. 6 shows a structural block diagram of exemplary electronic device capable of being used for implementing the embodiments of the present disclosure.

### DETAILED DESCRIPTION OF THE EMBODIMENTS

The exemplary embodiments of the present disclosure will be illustrated below in connection with the accompanying drawings, include various details of the embodiments of the present disclosure to facilitate understanding, and should be regarded to be merely exemplary. Therefore, those of ordinary skill in the art should recognize that various changes and modifications can be made to the embodiments described herein without departure from the scope of the present disclosure. Similarly, for clarity and conciseness, description on the known functions and structures are omitted in the following description.

In the present disclosure, unless otherwise noted, terms such as "first", "second" and the like are used for describing each element, but not intended to limit the position relationship, the timing relationship or the importance relationship of those elements, and such terms are merely used for distinguishing one component from another component. In some examples, a first element and a second element may refer to the same example of the element, and in some cases, based on the description of the context, they also may refer to different examples.

Terms used in the description on various examples in the present disclosure merely aim to describe the specific examples, but do not aim at limitation. Unless specified otherwise in the context, if the number of the elements is not specially defined, there may be one or more elements. In addition, the term "and/or" used in the present disclosure covers any one or all possible combination modes in the listed items.

By using a model obtained by an artificial intelligence technology, a vehicle damage position may be automatically detected on the basis of a static photo or a dynamic video and a vehicle loss assessment result is obtained. In the related art, if a user hopes to obtain the vehicle loss assessment result, the user may capture an image or video of the vehicle, and upload the captured image or video to a cloud for allowing the model deployed at the cloud to process the captured image or video so as to obtain the vehicle loss assessment result.

However, each image or video frame captured by the user needs to be uploaded to the cloud for processing, so there will be a relatively large latency when network connection is poor, and the real-time performance is poor. In addition, massive network transmission also consumes more network bandwidth resources and spends higher network bandwidth expenses.

The embodiments of the present disclosure will be described in detail below in connection with the accompanying drawings.

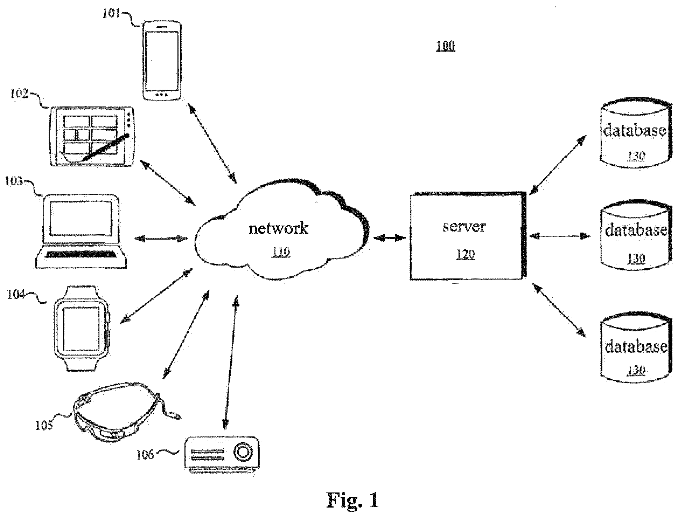

Fig. 1 shows a schematic diagram of an exemplary system 100 in which various methods and devices described herein can be implemented according to embodiments of the present disclosure. With reference to Fig. 1, the system 100 includes one or more client devices 101, 102, 103, 104, 105 and 106, a server 120 and one or more communication networks 110 for coupling the one or more client devices to the server 120. The client devices 101, 102, 103, 104, 105 and 106 may be configured to execute one or more applications.

In the embodiments of the present disclosure, a mobile terminal serving as the client devices 101, 102, 103, 104, 105 and 106 may be used for running one or more services or software applications of the vehicle loss assessment method according to the embodiments of the present disclosure. Although the present disclosure provides a method for performing vehicle loss assessment in an offline mode by using the mobile terminal, in some cases, the client devices may also be connected to the server 120 and/or repositories 130 through the networks 110 to acquire required data.

In some embodiments, the server 120 may also provide other services or software applications which may include a non-virtual environment and a virtual environment. In some embodiments, these services may be provided as web-based services or cloud services, and for example, provided to the user of the client devices 101, 102, 103, 104, 105 and/or 106 under a Software as a Service (SaaS) model.

In the configuration shown in Fig. 1, the server 120 may include one or more components for achieving functions executed by the server 120. These components may include a software component, a hardware component or a combination thereof, which may be executed by one or more processors. The user operating the client devices 101, 102, 103, 104, 105 and/or 106 may sequentially utilize one or more client applications to interact with the server 120 so as to utilize the services provided by these components. It should be understood that various different system configurations are possible, and may be different from the system 100. Therefore, Fig. 1 is an example of the system for implementing various methods described herein, but not intended to carry out limitation.

The user may use the client devices 101, 102, 103, 104, 105 and/or 106 for inputting an image for a vehicle loss assessment method. The client devices may provide an interface for enabling the user of the client devices to interact with the client devices. The client devices may also output information to the user via the interface. Although Fig. 1 only describes six types of client devices, those skilled in the art should understand that the present disclosure may support any number of client devices.

The client devices 101, 102, 103, 104, 105 and/or 106 may include various types of computer device, e.g., portable handheld device, a general-purpose computer (such as a personal computer and a laptop computer), a workstation computer, a wearable device, a game system, a thin client, various message transmission device, a sensor or other sensing device and the like. These computer device may operate various types and versions of software applications and operation systems, e.g., Microsoft Windows, Apple iOS, a UNIX-like operation system and a Linux or Linux-like operation system (e.g., Google Chrome OS); or includes various mobile operation systems, e.g., Microsoft Windows Mobile OS, iOS, Windows Phone and Android. The portable handheld device may include a cell phone, a smart phone, a tablet computer, a personal digital assistant (PDA) and the like. The wearable device may include a head-mounted display and other device. The game system may include various handheld game device, game device supporting the internet and the like. The client devices can execute various different applications, e.g., various Internet-related applications, a communication application (e.g., an e-mail application) and a short messaging service (SMS) application, and may use various communication protocols.

The networks 110 may be any type of network well known by those skilled in the art, and may use any one of many types of available protocols (including, but not limited to, TCP/IP, SNA, IPX and the like) for supporting data communication. Merely as an example, one or more networks 110 may be a local area network (LAN), an Ethernet-based network, a token ring, a wide area network (WAN), the internet, a virtual network, a virtual private network (VPN), an intranet, an extranet, a public switched telephone network (PSTN), an infrared network, a wireless network (e.g., Bluetooth, WIFI) and/or a random combination of these networks and/or other networks.

The server 120 may include one or more general-purpose computers, special server computers (e.g., PC (personal computer) servers, UNIX servers and middle-end servers), blade servers, mainframe computers, server clusters or any other proper arrangement and/or combinations. The server 120 may include one or more virtual machines operating a virtual operation system, or other computing architectures (e.g., one or more flexible pools of logic storage device which may be virtualized to maintain virtual storage device of the server) related to virtualization.

A computing unit in the server 120 may operate one or more operation systems including any one of the above-mentioned operation systems and any commercially available server operation systems. The server 120 may also operate any one of various additional server applications and/or intermediate layer applications, and includes an HTTP server, an FTP server, a CGI server, a JAVA server, a database server and the like.

In some embodiments, the server 120 may include one or more applications in order to analyze and merge a data feed and/or an event update received from the user of the client devices 101, 102, 103, 104, 105 and 106. The server 120 may also include one or more applications in order to display the data feed and/or a real-time event via one or more pieces of display device of the client devices 101, 102, 103, 104, 105 and 106.

In some embodiments, the server 120 may be a server of a distributed system, or a server combined with a blockchain. The server 120 may also be a cloud server, or an intelligent cloud computing server or an intelligent cloud host with the artificial intelligence technology. The cloud server is a host product in a cloud computing service system in order to overcome the defects of high management difficulty and poor service expansibility in services of a conventional physical host and a virtual private server (VPS).

The system 100 may also include one or more repositories 130. In some embodiments, these databases may be used for storing data and other information. For example, one or more of the repositories 130 may be used for storing information such as an audio file and a video file. A repository 130 may stay at various positions. For example, the repository used by the server 120 may be locally located in the server 120, or may be away from the server 120 and may be in communication with the server 120 via a network-based or special connection. The repository 130 may be of different types. In certain embodiments, the repository used by the server 120 may be a database, e.g., a relationship database. One or more of these databases may store, update and retrieve data to and from the databases in response to a command.

In certain embodiments, one or more of the repositories 130 may also be used by the application for storing application data. The databases used by the application may be different types of databases, e.g., a key value repository, an object repository or a conventional repository supported by a file system.

The system 100 of Fig. 1 may be configured and operated in various modes, so that various methods and devices according to the present disclosure may be applied.

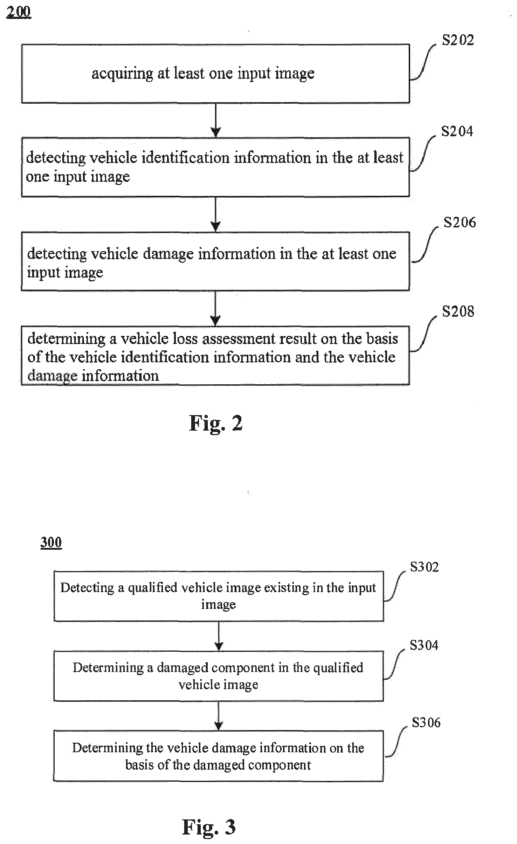

Fig. 2 shows a schematic flowchart of a vehicle loss assessment method according to embodiments of the present disclosure. The method shown in Fig. 2 may be implemented by the client devices 101 to 106 shown in Fig. 1. The vehicle loss assessment method shown in Fig. 2 may be implemented in connection with an application installed in a mobile terminal.

In the step S202, at least one input image may be acquired. A mobile terminal for executing the embodiments of the present disclosure may be provided with an image acquisition unit, such as a camera, a video camera and the like. The image acquisition unit may be used for acquiring an image or a video for the vehicle loss assessment method according to the embodiments of the present disclosure.

In some embodiments, at least one input image may be a plurality of static photos acquired by the image acquisition unit. In some other embodiments, at least one input image may be continuous video frames in the video acquired by the image acquisition unit. In yet some embodiments, at least one input image may be a combination of the static photo and the dynamic video.

In the step S204, vehicle identification information may be detected in the at least one input image acquired in the step S202. Basic information of a vehicle to be subjected to loss assessment may be acquired by utilizing the vehicle identification information. A vehicle loss assessment result may be obtained by combining a damage situation of the vehicle and the basic information of the vehicle. For example, service information of the vehicle, such as a product type, service life, maintenance history and the like, may be acquired by the vehicle identification information. The service information of the vehicle may influence the maintenance scheme and the maintenance cost of the vehicle.

In some embodiments, the at least one input image acquired in the step S202 may be sequentially processed, until the vehicle identification information is detected. If the vehicle identification information is not successfully detected in an image currently being processed, a next photo or a next image frame acquired after the image currently being processed may be read to continue to try for detection.

In some implementations, a prompt may be output so as to help a user to capture an image more suitable for detection. For example, a prompt of an occupied proportion of the vehicle identification information in the image to be captured by the user in the image, a prompt of a position of the vehicle identification information of the user on the vehicle, a prompt that image brightness is insufficient and illumination is required and the like may be output.

In some implementations, the vehicle identification information of the vehicle may be detected by utilizing a model implemented by a deep neural network. For example, detection may be implemented by utilizing a deep neural network implemented by a support vector machine (SVM) model.

In some implementations, the vehicle identification information of the vehicle may be detected by utilizing a universal character detection model. For example, detection may be implemented by utilizing a model implemented by a convolutional neural network.

In yet other implementations, if the vehicle identification information still cannot be successfully detected out after more than a predetermined number of times of detection, a prompt may be output so as to prompt the user to manually input related information. In some examples, a prompt may be output so as to indicate where the user may acquire the corresponding identification information on the vehicle.

In the step S206, vehicle damage information may be detected in the at least one input image acquired in the step S202. In some embodiments, each component of the vehicle may be obtained by detecting the at least one input image, it is determined which components in all the components of the vehicle are damaged, and damage types are determined. For example, components of the vehicle, such as front pillars, headlamps, wheels, a bumper and the like, in the image may be determined by image detection. By image detection, vehicle damage such as a vehicle panel being scratched by 10cm can be identified.

In some embodiments, a prompt may be output so as to prompt the user to adjust a capturing effect of the vehicle. For example, the user may be prompted to carry out capturing at a proper angle or distance by a text or voice output.

In the step S208, a vehicle loss assessment result may be determined on the basis of the vehicle identification information determined in the step S204 and the vehicle damage information determined in the step S206.

In some embodiments, the vehicle loss assessment result may include the maintenance scheme and the maintenance cost of the vehicle. In some implementations, information of a current maintenance scheme and maintenance cost, which is used for the identified vehicle, may be acquired by a network, and the maintenance scheme and the maintenance cost of the vehicle may be calculated on the basis of the damage type and a damage degree of the vehicle.

By utilizing the vehicle loss assessment method executed by the mobile terminal, which is provided by the embodiments of the present disclosure, intelligent loss assessment on the vehicle may be implemented through applications installed at the mobile terminal. The user may utilize the mobile terminal to capture a complete image for the vehicle and an image of a damaged component, and utilize a model deployed in the application installed on the mobile terminal to implement image detection and acquire the vehicle loss assessment result, so that small latency and high real-time performance in the loss assessment process may be achieved. The mobile terminal may simultaneously achieve functions of image acquisition and image processing and the step of uploading the image to the cloud for processing is omitted, thus, it is prevented that image transmission may occupy a large amount of network resources, network service resources are saved, and network bandwidth expenses are saved. Even though a current network connection situation is poor, the vehicle loss assessment result may also be timely acquired.

Fig. 3 shows a flowchart of a schematic process of detecting vehicle damage information according to embodiments of the present disclosure. A method 300 shown in Fig. 3 may be operations executed for one input image in the at least one input image. By utilizing the method 300, a higher-quality image may be acquired for detecting vehicle damage through identifying whether a qualified vehicle image exists in the image and further guiding the user to capture a close-up image of a damaged component.

As shown in Fig. 3, in the step S302, the qualified vehicle image existing in the input image may be detected.

In some embodiments, a rule for judging whether the vehicle in the image is qualified may be preset, and whether the vehicle image in the input image is qualified may be judged on the basis of the preset rule.

In some embodiments, the preset rule may include determining that a vehicle exists in the input image. In some implementations, whether the vehicle exists in the input image may be judged by utilizing a trained image classification model or target detection model. In some examples, the trained image classification model or target detection model may output a detection result so as to indicate whether the vehicle "exists" or "does not exist" in the image.

In some other embodiments, the preset rule may include determining that a distance between the vehicle existing in the input image and the mobile terminal for capturing the image reaches a distance threshold. In some implementations, it may be judged whether the distance between the vehicle and the mobile terminal for capturing the image reaches the distance threshold by a proportion of the size of the vehicle existing in the captured image to the overall size of the image. In some examples, when the proportion of the size of the vehicle existing in the image to the overall size of the image is greater than a preset proportion threshold, it may be considered that the distance between the vehicle existing in the input image and the mobile terminal for capturing the image reaches the distance threshold. In some other implementations, it may be judged whether the distance between the vehicle and the mobile terminal for capturing the image reaches the distance threshold by utilizing a distance sensor. In some examples, when the distance between the vehicle existing in the image and the mobile terminal for capturing the image is smaller than the preset distance threshold, it may be regarded that the distance between the vehicle existing in the input image and the mobile terminal for capturing the image reaches the distance threshold.

In some embodiments, the preset rule may include: determining whether the vehicle existing in the input image is static. It may be judged whether the vehicle existing in the image is static by comparing an image currently being processed with an image acquired previously or later. For example, if a position change obtained by comparison of the position of the vehicle in the image currently being processed with the position of the vehicle in the image acquired previously or later is smaller than a preset change threshold, it may be considered that the vehicle existing in the input image is static.

In the step S304, a damaged component in the qualified vehicle image may be determined.

In some embodiments, in order to implement the step S304, component segmentation may be carried out on the qualified vehicle image existing in the input image so as to identify a damage degree of each component of the vehicle. The damaged component in the qualified vehicle image may be determined on the basis of the damage degree of each component. By firstly identifying the damaged component in the finished vehicle and then acquiring the image of the component for identifying vehicle loss, a close-up photo including more details may be acquired so as to improve the vehicle loss detection effect.

Component segmentation on the vehicle image may be implemented by utilizing various image processing methods. In some embodiments, the vehicle image may be processed by utilizing a significance testing method so as to obtain the position of the damaged component in the vehicle image. In some other embodiments, an image segmentation model may be constructed by utilizing a technology based on the deep neural network. For example, the image segmentation model may be constructed by using a network based on Faster R-CN, YOLO and the like and deformation thereof. In some implementations, the vehicle image may be used as input of a model, and model parameters are configured to enable the image segmentation model to output vehicle component information detected from the image, including a vehicle component mask, a component label, a bounding box of the component and a confidence degree, wherein the confidence degree may be used for representing the damage degree of the component. In some examples, a vehicle component of which the damage degree is greater than a preset damage threshold may be determined as the damaged component on the basis of the damage threshold. A reasonable damage prediction result may be obtained by setting a proper damage threshold.

In the step S306, vehicle damage information may be determined on the basis of the damaged component. In some embodiments, after the damaged component in the qualified vehicle image is determined in the step S304, a prompt of capturing an image of the damaged component may be output for prompting the user to change an angle and distance for image capturing to acquire a close-up image of the damaged component, so that more image detail information of the damaged component can be obtained.

In some embodiments, the image of the damaged component may be detected to obtain a damage type of the damaged component. By carrying out detection on the close captured image of the damaged component, the damage type of the damaged component may be more accurately obtained.

In some implementations, the damage type of the damaged component may be detected by performing image detection utilizing the technology based on the deep neural network. For example, the image of the damaged component may be detected by utilizing a semantic segmentation model constructed by the deep neural network.

In some examples, the image of the damaged component may be processed by utilizing a damage identification model of a neural network based on HRNet or ShuffleNet so as to obtain the damage type of the damaged component. By utilizing a model which has few parameters and is implemented by the HRNet or the ShuffleNet, parameters of a model deployed on the mobile terminal may be reduced, and computing resources required for operating the model are reduced.

By properly configuring parameters of the damage identification model, the damage identification model may be utilized to process the image of the damaged component and output the label, the damage type, the bounding box of the damage and the confidence degree of the damaged component.

In some embodiments, the damage identification model may be optimized to reduce the parameters used by the damage identification model, so that resources required for deploying and operating the model in the mobile terminal can be reduced.

In some implementations, an input size of the damage identification model of the neural network based on HRNet or ShuffleNet may be set as 192*192. The image acquired by the mobile terminal may be compressed, so that the input image meets the requirement of the model on the input size. In some other implementations, the parameters used by the neural network may be reduced by carrying out operations of quantification, pruning and the like on the neural network.

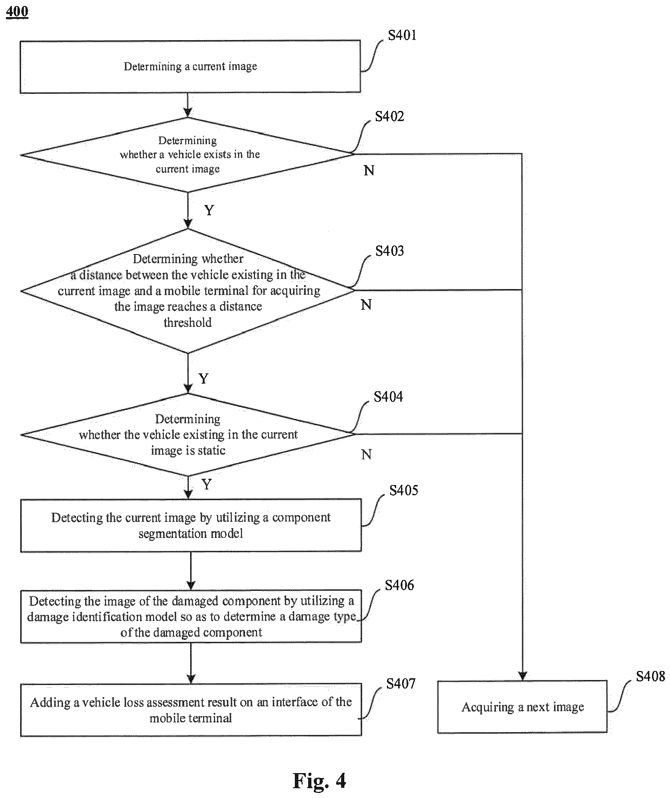

Fig. 4 shows a schematic flowchart of a process of detecting a vehicle image to obtain a vehicle loss assessment result according to embodiments of the present disclosure. By utilizing rules shown in Fig. 4 which are used for determining whether a vehicle image in an input image is qualified, a higher-quality image may be obtained for detecting vehicle loss.

After the vehicle identification information is acquired, the vehicle loss assessment result may be obtained by utilizing the method shown in Fig. 4.

As shown in Fig. 4, in the step S401, a current image for being detected to carry out vehicle loss assessment may be determined.

In the step S402, it may be determined whether the vehicle exists in the current image. In a case that the vehicle does not exist in the current image, the method 400 may be advanced to the step S408 of reading a next image for detection so as to obtain the vehicle loss assessment result.

In response to determining that the vehicle exists in the current image, the method 400 may be advanced to the step S403. In the step S403, it may be determined whether a distance between the vehicle existing in the current image and the mobile terminal for acquiring the image reaches a distance threshold.

In response to determining that the distance between the vehicle existing in the current image and the mobile terminal does not reach the distance threshold, the method 400 may be advanced to the step S408 of reading the next image for detection so as to obtain the vehicle loss assessment result.

In response to determining that the distance between the vehicle existing in the current image and the mobile terminal reaches the distance threshold, the method 400 may be advanced to the step S404. In the step S404, it may be determined whether the vehicle existing in the current image is static.

In response to determining that the vehicle existing in the current image is not static, the method 400 may be advanced to the step S408 of reading the next image for detection so as to obtain the vehicle loss assessment result.

In response to determining that the vehicle existing in the current image is static, the method 400 may be advanced to the step S405. In the step S405, the current image may be detected by utilizing a component segmentation model so as to determine the damaged component of the vehicle existing in the current image.

In the step S406, the image of the damaged component may be detected by utilizing the damage identification model so as to determine the damage type of the damaged component.

Herein, the component segmentation model and the damage identification model may be deployed in the application installed on the mobile terminal. Therefore, even though the network connection is poor, the mobile terminal may also call the installed application to implement vehicle intelligent loss assessment without uploading the image captured by the user to the cloud.

In the step S407, the vehicle loss assessment result determined on the basis of the damage type determined in the step S406 may be added on an interface of the mobile terminal.

In some embodiments, the mobile terminal may acquire maintenance related information pre-stored in a memory of the mobile terminal on the basis of the vehicle identification information. In some implementations, the vehicle identification information can be at least one of a license plate number and a vehicle identification number of the vehicle. The basic information of the vehicle may be conveniently acquired by utilizing at least one of the license plate number and the vehicle identification number.

Maintenance scheme and the maintenance cost associated with the vehicle damage information may be acquired to serve as the vehicle loss assessment result. By utilizing the maintenance scheme and the maintenance cost which are acquired in the step S407, the vehicle loss assessment result may be conveniently provided to the user.

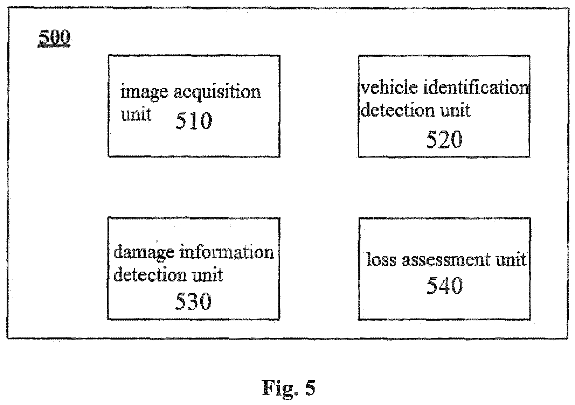

Fig. 5 shows a schematic block diagram of a vehicle loss assessment device applied to a mobile terminal according to embodiments of the present disclosure. As shown in Fig. 5, the vehicle loss assessment device 500 may include an image acquisition unit 510, a vehicle identification detection unit 520, a damage information detection unit 530 and a loss assessment unit 540.

The image acquisition unit 510 may be configured to acquire at least one input image. The vehicle identification detection unit 520 may be configured to detect vehicle identification information in the at least one input image. The damage information detection unit 530 may be configured to detect vehicle damage information in the at least one input image. The loss assessment unit 540 may be configured to determine a vehicle loss assessment result on the basis of the vehicle identification information and the vehicle damage information.

The operations of the units 510 to 540 of the vehicle loss assessment device 500 herein are respectively similar with the operations of the steps S202 to S208 described above, and are not repeated herein.

By utilizing the vehicle loss assessment device executed by the mobile terminal,

which is provided by the embodiments of the present disclosure, intelligent loss assessment on the vehicle may be implemented through applications installed at the mobile terminal. The user may utilize the mobile terminal to capture a complete image for the vehicle and an image of a damaged component, and utilize a model deployed in the application installed on the mobile terminal to implement image detection and acquire the vehicle loss assessment result, so that small latency and high real-time performance in the loss assessment process may be achieved. The mobile terminal may simultaneously achieve functions of image acquisition and image processing and the step of uploading the image to the cloud for processing is omitted, thus, it is prevented that image transmission may occupy a large amount of network resources, network service resources are saved, and network bandwidth expenses are saved. Even though a current network connection situation is poor, the vehicle loss assessment result may also be timely acquired.

According to the embodiments of the present disclosure, further provided is a mobile terminal, including: at least one processor; and a memory in communication connection with the at least one processor, wherein the memory stores instructions which may be executed by the at least one processor, and the instructions are executed by the at least one processor, so that the at least one processor can execute the methods described in connection with Fig. 1 to Fig. 4.

According to the embodiments of the present disclosure, further provided is a non-transitory computer readable storage medium storing a computer instruction, wherein the computer instruction is used for causing a computer to execute the methods described in connection with Fig. 1 to Fig. 4.

According to the embodiments of the present disclosure, further provided is a computer program product, including a computer program, wherein the computer program implements the methods described in connection with Fig. 1 to Fig. 4 when being executed by a processor.

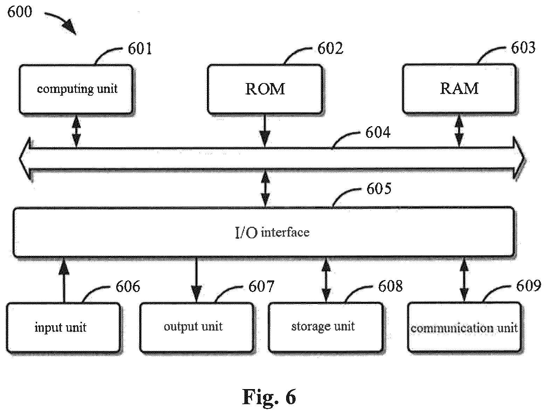

With reference to Fig. 6, a structural block diagram of electronic device 600 capable of being used as the mobile terminal provided by the present disclosure will now be described, which is an example of hardware device capable of being applied to each aspect of the present disclosure. The electronic device aims to represent various forms of digital electronic computer device, such as a laptop computer, a desktop computer, a working table, a personal digital assistant, a server, a blade server, a mainframe computer, and other suitable computers. The electronic device may also represent various forms of mobile devices, such as a personal digital assistant, a cell phone, a smart phone, a wearable device and other similar computing devices. The parts, connections and relationships of the parts and functions of the parts are merely used as examples, but not intended to limit implementation of the present disclosure, which is described and/or requested herein.

As shown in Fig. 6, the device 600 includes a computing unit 601, which may execute various proper actions and processing according to a computer program stored in a read-only memory (ROM) 602 or a computer program loaded into a random-access memory (RAM) 603 from a storage unit 608. In the RAM 603, various programs and data required for operation of the device 600 may also be stored. The computing device 601, the ROM 602 and the RAM 603 are connected with each other by a bus 604. An input/output (I/O) interface 605 is also connected to the bus 604.

A plurality of parts in the device 600 are connected to the I/O interface 605, including: an input unit 606, an output unit 607, the storage unit 608 and a communication unit 609. The input unit 606 may be any type of device capable of inputting information to the device 600, and the input unit 606 may receive input digital or character information and generate a key signal input related to user settings and/or function control of the electronic device, and may include, but is not limited to, a mouse, a keyboard, a touch screen, a trackpad, a trackball, a joystick, a microphone and/or a remote controller. The output unit 607 may be any type of device capable of presenting information, and may include, but is not limited to, a display, a loudspeaker, a video/audio output terminal, a vibrator and/or a printer. The storage unit 608 may include, but is not limited to, a magnetic disk and an optical disc. The communication unit 609 allows the device 600 to exchange information/data with other device through a computer network such as the internet and/or various telecommunication networks, and may include, but is not limited to, a modem, a network card, infrared communication device, a wireless communication transceiver and/or a chipset, e.g., Bluetooth™ device, 1302.11 device, WiFi device, WiMax device, cellular communication device and/or analogues.

The computing unit 601 may be various universal and/or special processing components with processing and computing capacity. Some examples of the computing unit 601 include, but are not limited to, a central processing unit (CPU), a graphics processing unit (GPU), various special artificial intelligence (AI) computing chips, various computing units operating a machine learning model algorithm, a digital signal processor (DSP), and any proper processor, controller, microcontroller and the like. The computing unit 601 executes each method and processing described above, e.g., the vehicle loss assessment method according to the embodiments of the present disclosure. For example, in some embodiments, the vehicle loss assessment method may be implemented as a computer software program which is tangibly included in a machine readable medium, e.g., the storage unit 608. In some embodiments, part or all of the computer program may be loaded and/or installed on the device 600 via the ROM 602 and/or the communication unit 609. When the computer program is loaded to the RAM 603 and executed by the computing unit 601, one or more steps of the methods described above may be executed. Alternatively, in other embodiments, the computing unit 601 may be configured to execute the vehicle loss assessment method in any other proper modes (e.g., by means of firmware).

Various implementations of the system and the technology described above herein may be implemented in a digital electronic circuit system, an integrated circuit system, a field programmable gate array (FPGA), an application special integrated circuit (ASIC), an application special standard product (ASSP), a system-on-chip (SOC) system, a complex programmable logic device (CPLD), computer hardware, firmware, software and/or a combination thereof. These various implementations may include: implementation in one or more computer programs; the one or more computer programs may be executed and/or interpreted on a programmable system including at least one programmable processor; and the programmable processor may be a special or universal programmable processor, and may receive data and instructions from a storage system, at least one input device and at least one output device, and transmit the data and the instructions to the storage system, the at least one input device and the at least one output device.

Program codes for implementing the method provided by the present disclosure may be written by adopting any combination of one or more programming languages. These program codes may be provided to a processor or a controller of a universal computer, a special purpose computer or other programmable data processing devices, so that when the program codes are executed by the processor or the controller, functions/operations specified in the flowchart and/or the block diagram are implemented. The program codes may be completely executed on a machine, partially executed on the machine, partially executed on the machine and partially executed on a remote machine as a stand-alone software package, or completely executed on the remote machine or a server.

In the context of the present disclosure, the machine readable medium may be a tangible medium, and may include or store a program which is used for an instruction execution system, device or device to use or combined with the instruction execution system, device or device for use. The machine readable medium may be a machine readable signal medium or a machine readable storage medium. The machine readable medium may include, but is not limited to, electronic, magnetic, optical, electromagnetic, infrared or semiconductor systems, devices or device, or any proper combination of the contents above. A more specific example of the machine readable storage medium may include an electrical connection based on one or more wires, a portable computer disk, a hard disk, a random-access memory (RAM), a read-only memory (ROM), an erasable programmable read-only memory (EPROM or a flash memory), an optical fiber, a portable compact disc read-only memory (CD-ROM), optical storage device, magnetic storage device, or any proper combination of the contents above.

In order to provide interaction with the user, the system and the technology described herein may be implemented on a computer, and the computer is provided with: a display device (e.g., a cathode ray tube (CRT) or a liquid crystal display (LCD) monitor) for displaying information to a user; and a keyboard and a pointing device (e.g., a mouse or a trackball), wherein the user may provide an input to the computer by the keyboard and the pointing device. Other types of devices may also be used for providing interaction with the user; for example, feedback provided to the user may be any form of sensing feedback (e.g., visual feedback, auditory feedback, or haptic feedback); and the input from the user may be received in any form (including sound input, voice input or haptic input).

The system and the technology described herein may be implemented in a computing system (for example, used as a data server) including a background part, or a computing system (e.g., an application server) including a middleware part, or a computing system (e.g., a user computer with a graphical user interface or a network browser, the user may interact with the implementations of the system and the technology described herein by the graphical user interface or the network browser) including a front end part, or a computing system including any combination of the background part, the middleware part or the front end part. The parts of the system may be connected mutually by any form or medium of digital data communication (e.g., a communication network). Examples of the communication network includes: a local area network (LAN), a wide area network (WAN) and the internet.

The computer system may include a client and a server. The client and the server are generally away from each other, and generally interact with each other by the communication network. A relationship between the client and the server is generated by the computer programs which are operated on the corresponding computers and mutually have client-server relationships.

It should be understood that various forms of flows as shown above may be used to reorder, increase or delete the steps. For example, the steps recorded in the present disclosure may be executed in parallel and may also be sequentially executed or executed in different sequences, which is not limited herein as long as the result expected by the technical solutions disclosed by the present disclosure can be achieved.

The embodiments or the examples of the present disclosure have been described with reference to the drawings, but it should be understood that the above-mentioned method, system and device are merely exemplary embodiments or examples, and the scope of the present disclosure is not limited by these embodiments and examples, but is defined only by authorized claims and the equivalent scope thereof. Various elements in the embodiments or the examples may be omitted or may be replaced with equivalent elements thereof. In addition, the steps may be executed in sequence different from the sequence described in the present disclosure. Further, various elements in the embodiments or the examples may be combined in various modes. It is important that as the technology evolves, many elements described herein may be replaced with equivalent elements appearing after the present disclosure.

## Claims

1. A vehicle loss assessment method executed by a mobile terminal, comprising:
acquiring at least one input image (S202);
detecting vehicle identification information in the at least one input image (S204);
detecting vehicle damage information in the at least one input image (S206); and
determining a vehicle loss assessment result on the basis of the vehicle identification information and the vehicle damage information (S208).

2. The method according to claim 1, wherein detecting the vehicle damage information in the at least one input image comprises:
for an input image of the at least one input image,
determining that a qualified vehicle image exists in the input image (S302);
determining a damaged component in the qualified vehicle image (S304); and
determining the vehicle damage information on the basis of the damaged component (S306).

3. The method according to claim 2, wherein a prompt of capturing an image of the damaged component is output after the damaged component in the qualified vehicle image is determined.

4. The method according to claim 2 or 3, wherein determining that the qualified vehicle image exists in the input image comprises:
determining whether a vehicle exists in the input image;
in response to determining that the vehicle exists in the input image, determining whether a distance between the vehicle existing in the input image and the mobile terminal reaches a distance threshold;
in response to determining that the distance between the vehicle existing in the input image and the mobile terminal reaches the distance threshold, determining whether the vehicle existing in the input image is static; and
in response to determining that the vehicle existing in the input image is static, determining that the qualified vehicle image exists in the input image.

5. The method according to any one of claims 2-4, wherein determining the damaged component in the qualified vehicle image comprises:
carrying out component segmentation on the qualified vehicle image existing in the input image to identify a damage degree of each component of the vehicle; and
determining the damaged component in the qualified vehicle image on the basis of the damage degree of each component.

6. The method according to claim 5, wherein determining the damaged component in the qualified vehicle image on the basis of the damage degree of each component comprises:
determining a vehicle component of which the damage degree is greater than a damage threshold as the damaged component.

7. The method according to any one of claims 2-6, wherein determining the vehicle damage information on the basis of the damaged component comprises:
performing image detection for an image of the damaged component so as to obtain a damage type of the damaged component.

8. The method according to claim 7, wherein performing image detection for the image of the damaged component so as to obtain the damage type of the damaged component comprises:
processing the image of the damaged component by utilizing a neural network based on HRNet or ShuffleNet so as to obtain the damage type of the damaged component.

9. The method according to claim 8, wherein an input size of the neural network is 192*192.

10. The method according to any one of claims 1-9, wherein the vehicle identification information comprises at least one of a license plate number and a vehicle identification number of a vehicle.

11. The method according to any one of claims 1-9, wherein determining the vehicle loss assessment result on the basis of the vehicle identification information and the vehicle damage information comprises:
acquiring a maintenance scheme and maintenance cost associated with the vehicle damage information as the vehicle loss assessment result.

12. A vehicle loss assessment device applied to a mobile terminal, comprising:
an image acquisition unit (510), configured to acquire at least one input image;
a vehicle identification detection unit (520), configured to detect vehicle identification information in the at least one input image;
a damage information detection unit (530), configured to detect vehicle damage information in the at least one input image; and
a loss assessment unit (540), configured to determine a vehicle loss assessment result on the basis of the vehicle identification information and the vehicle damage information.

13. The vehicle loss assessment device according to claim 12, wherein detecting the vehicle damage information in the at least one input image comprises:
for an input image of the at least one input image,
determining that a qualified vehicle image exists in the input image;
determining a damaged component in the qualified vehicle image; and
determining the vehicle damage information on the basis of the damaged component.

14. A non-transitory computer readable storage medium storing computer instructions, wherein the computer instructions are used for causing a computer to execute the method according to any one of claims 1 to 11.

15. A computer program product, comprising a computer program, wherein the computer program implements the method according to any one of claims 1 to 11 when being executed by a processor.
